# EUROPEAN PATENT SPECIFICATION

(11) **EP 2 189 856 B1**
(45) Date of publication and mention of the grant of the patent: **09.01.2013**
(21) Application number: 08169587.6
(22) Date of filing: 21.11.2008
(51) Int. Cl.: G05B 19/00, H02P 5/74

(54) **Electric household appliance comprising an electronic control device for controlling at least two three-phase electric motors**
Elektrisches Haushaltsgerät, das eine elektronische Steuerungsvorrichtung zum Steuern von mindestens zwei Dreiphasen-Elektromotoren umfasst
Appareil électroménager doté d'un dispositif de commande électronique pour commander au moins deux moteurs électriques triphasiques

(43) Date of publication of application: 26.05.2010
(73) Proprietor: Electrolux Home Products Corporation N.V., 1130 Brussel (BE)
(72) Inventor: Marson, Enrico, 33080 Azzano Decimo (IT)
(74) Representative: Nardoni, Andrea

(56) References cited:
- US-A1- 2003 182 975
- DATABASE EPODOC EUROPEAN PATENT OFFICE, THE HAGUE, NL; XP002525415 & CN 101 232 250 A (UNIV ZHEJIANG [CN]) 30 July 2008 (2008-07-30)

## Description

The present invention relates to an electric household appliance comprising an electronic control device for controlling at least two three-phase electric motors.

More specifically, the present invention relates to an electric household appliance, such as a washing machine or drier, comprising an electronic device capable of controlling, by means of a single digital signal microprocessor - hereinafter referred to as DSP - two or more three-phase, induction and/or permanent-magnet electric motors used to rotate corresponding rotating mechanical members; to which the following description refers purely by way of example.

As is known, some electric household appliances need to control a number of electric motors to rotate corresponding rotating mechanical devices in the appliance independently and at different speeds.

For example, combination washing machine-driers are typically equipped with: an electric motor connected to the laundry drum; and an electric motor connected to a fan for circulating hot air inside the drum.

As is also known, to improve the energy consumption efficiency of the appliance, it has been proposed to replace the conventional two-phase electric motors, typically employed in driers and/or washing machines, with three-phase electric motors i.e. three-phase, induction or permanent-magnet electric motors.

Using three-phase electric motors in new-generation electric household appliances calls for employing new electronic control devices designed to control two three-phase motors in such a way as to adjust their speed independently.

Electronic control devices of this type, however, are relatively expensive, and so have a far from negligible impact on the overall manufacturing cost of the appliance.

Accordingly, over the past few years, considerable research has been carried out in the appliance industry to devise simple, low-cost electronic control devices capable of controlling two or more three-phase motors of the type described, but a lot of work still remains to be done.

Prior art document US 2003/0182975 A1 discloses a device for controlling a brushless motor and a washing machine having said device. Such document does not provide a solution for controlling two or more three-phases motors in the same household appliance.

CN 101 309 066 A discloses an inverter using one main control chip to control two three-phase asynchronous motor at the same time. Such document does not provide teachings to control motors in a household appliance.

It is an object of the present invention to provide an electric household appliance comprising an electronic control device capable of controlling at least two three-phase, induction and/or permanent-magnet electric motors, and which is simpler and cheaper than known electronic control devices.

According to the present invention, there is provided an electric household appliance comprising an electronic control device for controlling two three-phase, induction and/or permanent-magnet electric motors, as claimed in Claim 1 and preferably, though not necessarily, in any one of the Claims depending directly or indirectly on Claim 1.

A non-limiting embodiment of the present invention will be described by way of example with reference to the accompanying drawings, in which:
Figure 1 shows, schematically, an electric household appliance comprising an electronic control device for controlling two three-phase, induction and/or permanent-magnet electric motors and in accordance with the teachings of the present invention;
Figure 2 shows a schematic of the electronic control device in accordance with the teachings of the present invention.

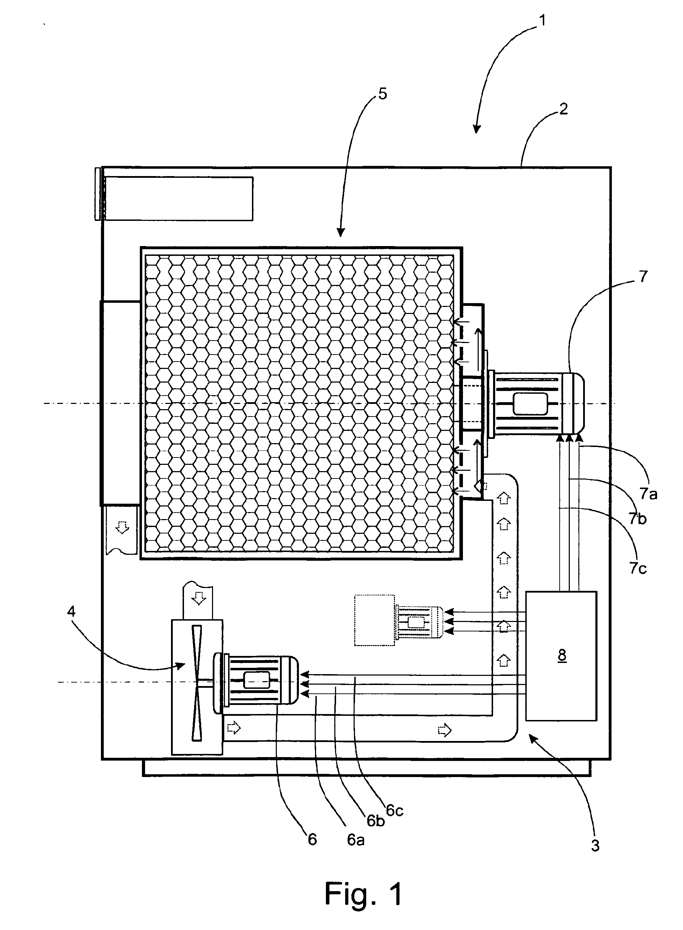

Number 1 in Figure 1 indicates as a whole an electric household appliance, such as a drier or washing machine, comprising a casing 2; and a wash and/or dry assembly 3 housed inside casing 2, and in turn comprising a number of rotating mechanical members, each rotated by a corresponding three-phase, permanent-magnet electric motor or by three-phase, induction electric motor.

Appliance 1 also comprises an electronic control device 8 for controlling two or more electric motors supplied with three currents, i.e. three-phase electric motors, in such a way as to adjust the speed of the motors, on command, independently of one another.

For the sake of simplicity, the following description refers, purely by way of example, to an electric household appliance 1 comprising two rotating mechanical members 4 and 5, e.g. a fan and a laundry drum, connected to two corresponding three-phase electric motors 6 and 7, and wherein the circuit architecture of electronic control device 8 is designed to specifically control electric motors 6 and 7.

The principle underlying the present invention, however, obviously also applies to an electronic control device 8 capable of controlling more than two permanent-magnet and/or induction electric motors. In other words, the circuit architecture of electronic control device 8 may be configured, on the basis of the inventive principle described in detail below, to also control more than two three-phase, permanent-magnet and/or induction electric motors.

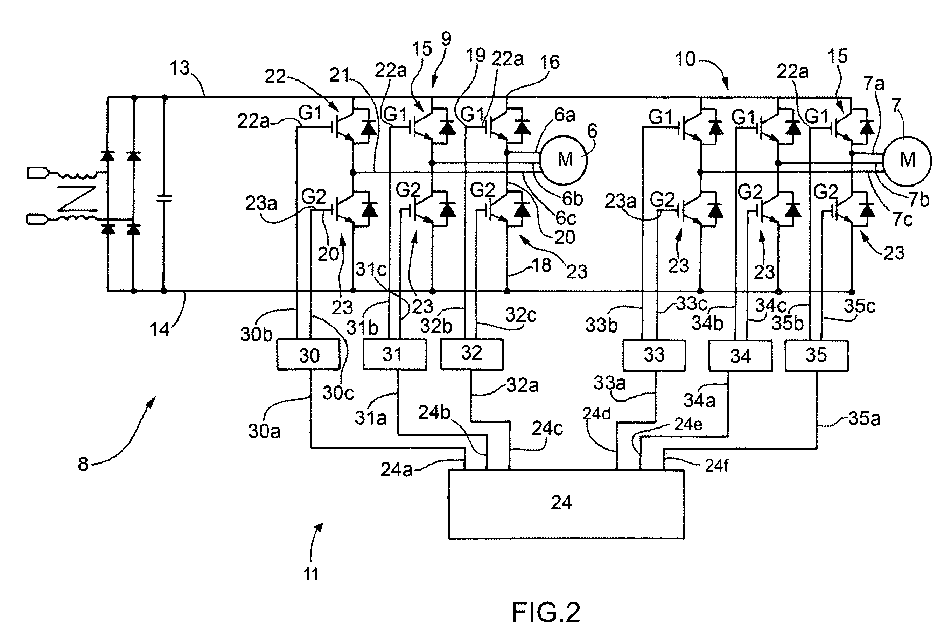

With reference to the Figure 2 example, electronic control device 8 comprises a first and second power circuit 9 and 10 for supplying three currents to the three phases 6a, 6b, 6c of electric motor 6, and three currents to the three phases 7a, 7b, 7c of electric motor 7 respectively; a control circuit 11 for controlling operation of power circuits 9 and 10 to regulate the three currents necessary to generate the rotating magnetic fields of each electric motor 6, 7 in accordance with a predetermined time pattern.

More in detail, control circuit 11 comprises a control stage 24, which controls first and second power circuit 9 and 10 to regulate the three currents necessary to generate the rotating magnetic fields of each electric motor 6, 7 in accordance with a predetermined time pattern.

With reference to Figure 2, each power circuit 9, 10 comprises a first and second power line 13 and 14 at a direct supply voltage Vdc; and six controlled switches arranged in twos on three separate power circuit branches 15.

More specifically, each power circuit branch 15 has two power terminals 16 and 18 connected to first and second power line 13 and 14; two switching terminals 19 and 20 supplied by control circuit 11 with a PWM control signal G1 and a PWM control signal G2 respectively; and an output terminal 21 connected to one of the three phases 6a-6c or 7a-7c of electric motor 6 or 7 to supply electric current to electric motor 6 or 7.

More specifically, each power circuit branch 15 comprises a top controlled switch 22 in the form of a transistor, e.g. an IGBT (Insulated Gate Bipolar Transistor), having a collector terminal and emitter terminal connected to terminals 16 and 21 respectively, and a gate terminal 22a receiving control signal G1, which determines regulation of the current flow in one of the three phases 6a-6c or 7a-7c of electric motor 6 or 7; and a bottom controlled switch 23, also in the form of a transistor, e.g. an IGBT (Insulated Gate Bipolar Transistor), having a collector terminal and emitter terminal connected to terminals 18 and 21, and a gate terminal 23a receiving control signal G2, which determines regulation of the current flow in the same phase of electric motor 6 or 7.

In the Figure 2 example, control stage 24 comprises a processing module having six output terminals 24a-24f supplying PWM (Pulse Width Modulation) signals SPWM1-SPWM6 with corresponding duty cycles, each associated with an on/off condition of a controlled switch 22 or 23; and six amplification drivers 30-35, each associated with a respective power circuit branch 15, and having an input terminal 30a-35a receiving PWM signal SPWM1-SPWM6, an output terminal 30b-35b supplying control signal G1 of switch 22, and an output terminal 30c-35c supplying control signal G2 of switch 23.

More specifically, control stage 24 conveniently comprises a DSP microprocessor, or any similar microprocessor having an inner PWM timer, configured to supply, at three output terminals 24a-24c, three PWM signals SPWM1-SPWM3, the duty cycles of which regulate, by controlling controlled switches 22 and 23 of power circuit 9, the three currents supplied to electric motor 6.

The microprocessor is also configured to supply, at three output terminals 24d-24f, three PWM signals SPWM4-SPWM6, the duty cycles of which regulate, by controlling controlled switches 22 and 23 of power circuit 10, the three currents supplied to electric motor 7.

With reference to Figure 2, input terminals 30a-35a of drivers 30-35 are connected to respective output terminals 24a-24f of the microprocessor to receive PWM signals SPWM1-SPWM6; output terminals 30b-35b are each connected to a corresponding control terminal 22a of a controlled switch 22 to supply control signal G1; and output terminals 30c-35c are each connected to a corresponding control terminal 23a of a controlled switch 23 to supply it with control signal G2.

More specifically, each driver 30-35 is designed to amplify the PWM signal SPWM1-SPWM6 generated by the microprocessor, to supply it to output terminal 30b-35b in the form of control signal G1.

Each driver 30-35 is also designed to negate the amplified PWM signal SPWM1-SPWM6 from the microprocessor, to delay the negated PWM signal pulses as a function of a time interval ΔT, and to supply the negated, delayed signal to output terminal 30c-35c in the form of control signal G2.

In other words, each driver 30-35 amplifies the respective PWM signal SPWM1-SPWM6 from the microprocessor to supply output terminal 30b-35b with a PWM control signal G1 whose pulses correspond to the pulses of the PWM signal SPWM1-SPWM6, and to supply output terminal 30c-35c with a PWM control signal G2 whose pulses correspond to the pulses of the negated PWM signal SPWM1-SPWM6.

In connection with the above, it should be pointed out that one of the two controlled switches in each circuit branch 15 is conveniently controlled by a control signal generated indirectly by the driver negating a respective PWM signal generated by the microprocessor.

In other words, the microprocessor controls the two electric motors by assigning to the control of each power circuit only three PWM signals by which to switch three controlled switches, and leaving it to the respective drivers to generate the other three complementary control signals necessary to correctly and synchronously switch the other three controlled switches in the same power circuit.

In actual use, for each power circuit 9, 10, the microprocessor corresponding to a DSP microprocessor, generates three independent PWM signals SPWM1-3, SPWM4-6, and regulates the relative duty cycles as a function of the currents to be supplied, at a given instant, to the three phases of relative electric motor 6, 7.

The three PWM signals SPWM1-SPWM6 are then supplied to the three drivers 30-35, each of which amplifies the PWM signal SPWM1-SPWM6 generated by the DSP microprocessor, to supply it, unaltered, to the output terminal, and at the same time negates and delays the amplified PWM signal SPWM1-SPWM6 as a function of time interval ΔT, to supply it to output terminal 30c-35c in the form of control signal G2.

At this point, control signals G1 and G2 provide for turning respective controlled switches 22 and 23 on/off.

It should be pointed out that the DSP microprocessor can be programmed so that the three PWM signals are generated to control any configuration of three controlled switches in the respective power circuit branches.

The above architecture has the advantage of reducing to three the number of PWM signals assigned by the DSP microprocessor to the control of each power circuit, and which is achieved by the drivers negating and delaying the relative PWM signals.

Besides being extremely simple, the above circuit architecture also reduces the manufacturing cost of the electronic control device, in that, in the simplest configuration controlling, for example, two three-phase electric motors, it requires only one DSP microprocessor designed to generate six PWM signals.

Clearly, changes may be made to the electronic control device as described herein without, however, departing from the scope of the present invention as defined in the accompanying Claims.

## Claims

1. An electric household appliance (1) comprising a casing (2); at least two rotating devices (4) (5) housed inside said casing (2) and rotating about respective axes of rotation; at least two three-phase, induction and/or permanent-magnet electric motors (6)(7), each for rotating a corresponding rotating device (4)(5); and electronic control means (8) for controlling said three-phase electric motors (6) (7), and comprising at least two electronic power circuits (9)(10), each of which has three output terminals connected to the three supply phases of an electric motor (6)(7) to supply three electric currents to the three supply phases, the electric control means (8) further comprising
- two direct-current power lines (13) (14) at two respective predetermined electric reference potentials;
- three power circuit branches (15) connected between said two power lines (13)(14);
- six controlled switches (22) (23) arranged two to each circuit branch (15), and having six respective control terminals (19)(20) for receiving six corresponding PWM control signals (G1)(G2);
said electric household appliance being **characterized in that** said electronic control means (8) comprise a processing module (24) for generating at least six PWM pulse signals and regulating the duty cycle of each PWM pulse signal; and at least six amplifying modules (30-35), each of which receives one PWM pulse signal (SPWM1-SPWM6) from said processing module (24), and has two output terminals (30b-35b)(30c-35c) connected to the respective control terminals (19)(29) of two controlled switches (22)(23) in the same power circuit branch (15); each said amplifying module (30-35) amplifying said one PWM pulse signal (SPWM1-SPWM6) to supply one said output terminal with a said PWM control signal (G1) whose pulses correspond to the pulses of said one PWM pulse signal (SPWM1-SPWM6), and to supply the other output terminal with a PWM control signal (G2) whose pulses correspond to the pulses of a negated said one PWM pulse signal (SPWM1-SPWM6).

2. An electric household appliance as claimed in Claim 1, wherein said amplifying module (30-35) amplifies said one PWM pulse signal (SPWM1-SPWM6) to supply one said output terminal with a PWM control signal (G2) whose pulses correspond to the pulses of the negated said one PWM pulse signal (SPWM1-SPWM6) delayed by a predetermined time interval ΔT.

3. An electric household appliance as claimed in any one of the foregoing Claims, wherein said processing module (24) is a DSP microprocessor.

4. An electric household appliance as claimed in any one of the foregoing Claims, wherein said controlled switches comprise transistors.

5. An electric household appliance as claimed in any one of the foregoing Claims, wherein the electric household appliance is a drier washing machine.

6. An electric household appliance as claimed in any one of the foregoing Claims, wherein the electric household appliance is a drier.

## Patentansprüche

1. Haushaltselektrogerät (1), mit einem Gehäuse (2), mindestens zwei Drehvorrichtungen (4) (5), die in dem Gehäuse (2) untergebracht sind und sich um entsprechende Drehachsen drehen, mindestens zwei Dreiphasen-, Induktions- und/oder Permanentmagnetelektromotoren (6) (7), jeweils zum Drehen einer entsprechenden Drehvorrichtung (4) (5), und elektronischen Steuermitteln (8) zum Steuern der Drelphasen-Elektromotoren (6) (7), und mit mindestens zwei elektronischen Stromkreisen (9) (10), deren jeder drei Ausgangsanschlüsse aufweist, die an die drei Versorgungsphasen eines Elektromotors (6) (7) angeschlossen sind, um drei Ströme an die drei Versorgungsphasen zu liefern, wobei die elektronischen Steuermittel (8) ferner umfassen:
- zwei Gleichstromleitungen (13) (14) bei zwei entsprechenden, vorbestimmten elektrischen Referenzpotentialen,
- drei Abzweigstromkreise (15), die zwischen die beiden Stromleitungen (13) (14) geschaltet sind,
- sechs gesteuerte Schalter (22) (23), die jeweils paarweise an jedem Abzweigstromkreis (15) angeordnet sind und die sechs entsprechende Steueranschlüsse (19) (20) zum Empfangen sechs entsprechender PWM-Steuersignale (G1) (G2) aufweisen,
wobei das Haushaltselektrogerät **dadurch gekennzeichnet ist, dass** die elektronischen Steuermittel (8) ein Verarbeitungsmodul (24) zum Erzeugen von mindestens sechs PWM-Impulsslgnalen und zum Regeln des Tastverhältnisses jedes PWM-Impulssignals und mindestens sechs Verstärkermodule (30-35) umfassen, die jeweils ein PWM-Impussignal (SPWM1-SPWM6) von dem Verarbeitungsmodul (24) empfangen und jeweils zwei Ausgangsanschlüsse (30b-35b) (30c-35c) aufweisen, die an die entsprechenden Steueranschlüsse (19) (29) zweier gesteuerter Schalter (22) (23) in demselben Abzweigstromkreis (15) angeschlossen sind, wobei jedes Verstärkermodul (30-35) das jeweilige PWM-Impulssignal (SPWM1-SPWM6) verstärkt, um dem jeweiligen Ausgangsanschluss ein entsprechendes PWM-Steuersignal (G1) zu liefern, dessen Impulse den Impulsen des jeweiligen PWM-Impulssignals (SPWM1-SPWM6) entsprechen, und um dem jeweils anderen Ausgangsanschluss ein PWM-Steuersignal (G2) zu liefern, dessen Impulse den Impulsen eines negierten PWM-Impussignals (SPWM1-SPWM6) entsprechen.

2. Haushaltselektrogerät nach Anspruch 1, wobei das Verstärkermodul (30-35) das jeweilige PWM-Impulssignal (SPWM1-SPWM6) verstärkt, um dem jeweiligen Ausgangsanschluss ein PWM-Steuersignal (G2) zu liefern, dessen Impulse den Impulsen des negierten PWM-Impussignals (SPWM1-SPWM6), um ein vorbestimmtes Zeitintervall ΔT verzögert, entsprechen.

3. Haushaltselektrogerät nach einem der vorhergehenden Ansprüche, wobei das Verarbeitungsmodul (24) ein DSP-Mikroprozessor ist.

4. Haushaltselektrogerät nach einem der vorhergehenden Ansprüche, wobei die gesteuerten Schalter Transistoren umfassen.

5. Haushaltselektrogerät nach einem der vorhergehenden Ansprüche, wobei das Haushaltselektrogerät eine Waschmaschine ist.

6. Haushaltselektrogerät nach einem der vorhergehenden Ansprüche, wobei das Haushaltselektrogerät ein Trockner ist.

## Revendications

1. Appareil électroménager (1) comprenant une carcasse (2) ; au moins deux dispositifs rotatifs (4) (5) logés à l'intérieur de ladite carcasse (2) et tournant autour d'axes de rotation respectifs ; au moins deux moteurs électriques triphasés, à induction et/ou à aimant permanent (6) (7), chacun pour faire tourner un dispositif rotatif (4) (5) correspondant ; et des moyens de commande électronique (8) pour commander lesdits moteurs électriques triphasés (6) (7) et comprenant au moins deux circuits d'alimentation électroniques (9) (10), dont chacun a trois bornes de sortie raccordées aux trois phases d'alimentation d'un moteur électrique (6) (7) pour fournir trois courants électriques aux trois phases d'alimentation,
les moyens de commande électronique (8) comprenant :
deux lignes d'alimentation en courant continu (13) (14) à deux potentiels de référence électriques prédéterminés respectifs ;
trois dérivations de circuit d'alimentation (15) raccordées entre lesdites deux lignes d'alimentation (13) (14) ;
six commutateurs commandés (22) (23) agencés par deux sur chaque dérivation de circuit (15), et ayant six bornes de commande (19) (20) respectives pour recevoir six signaux de commande MLI (G1) (G2) correspondants ;
ledit appareil électroménager étant **caractérisé en ce que** lesdits moyens de commande électronique (8) comprennent un module de traitement (24) pour générer au moins six signaux en impulsions MLI et réguler le cycle de service de chaque signal en impulsions MLI ; et au moins six modules d'amplification (30-35), dont chacun reçoit un signal en impulsions MLI (SPWM1-SPGdM6) dudit module de traitement (24) et a deux bornes de sortie (30b-35b) (30c-35c) raccordées aux bornes de Commande (19) (29) respectives des deux commutateurs commandés (22) (23) dans la même dérivation de circuit d'alimentation (15) ; chacun desdits modules d'amplification (30-35) amplifiant ledit un signal en impulsions MLI (SPWM1-SPWM6) pour fournir à l'une desdites bornes de sortie, ledit signal de commande MLI (G1) dont les impulsions correspondent aux impulsions dudit un signal en impulsions MLI (SPMM1-SPWM6), et pour fournir à l'autre borne de sortie un signal de commande MLI (G2) dont les impulsions correspondent aux impulsions d'un signal inversé desdits signaux en impulsions MLI (SPWM1-SPWM6).

2. Appareil électroménager selon la revendication 1, dans lequel ledit module d'amplification (30-35) amplifie ledit un signal en impulsions MLI (SPNM1-SPMM6) pour fournir à l'une desdites bornes de sortie un signal de commande MLI (G2) dont les impulsions correspondent aux impulsions du signal inversé desdits signaux en impulsions MLI (SPWM1-SPWM6) retardées par un intervalle de temps ΔT prédéterminé.

3. Appareil électroménager selon l'une quelconque des revendications précédentes, dans lequel ledit module de traitement (24) est un microprocesseur de signal numérique.

4. Appareil électroménager selon l'une quelconque des revendications précédentes, dans lequel lesdits commutateurs commandés comprennent des transistors.

5. Appareil électroménager selon l'une quelconque des revendications précédentes, dans lequel ledit appareil électroménager est une machine à laver.

6. Appareil électroménager selon l'une quelconque des revendications précédentes, dans lequel l'appareil électroménager est un sèche-linge.
